# EUROPEAN PATENT APPLICATION

(11) **EP 3 806 135 A1**
(43) Date of publication of application: **14.04.2021**
(21) Application number: 19806881.9
(22) Date of filing: 25.01.2019
(51) Int. Cl.: H01J 49/16, G01N 27/62

(54) **MALDI ION SOURCE AND MASS SPECTROMETER**

(30) Priority: 24.05.2018 JP 2018001902 U
(71) Applicant: SHIMADZU CORPORATION, Kyoto-shi, Kyoto 604-8511 (JP)
(72) Inventor: SHICHI, Hideharu, Kyoto-shi, Kyoto 604-8511 (JP)
(74) Representative: Müller-Boré & Partner Patentanwälte PartG mbB
(86) International application number: PCT/JP2019/002473
(87) International publication number: WO 2019/225059

(57) **Abstract**

In a MALDI ion source (1), laser light from a laser light source (2) is reflected by a mirror (5), and then energy of the laser light is adjusted by a polarization beam splitter (6). Then, the laser light of which the energy has been adjusted is applied toward a sample. The polarization beam splitter (6) is rotated to adjust the energy of the laser light. Therefore, in the MALDI ion source (1), it is possible to adjust the energy of the laser light and apply the laser light to the sample only by providing the rotatable polarization beam splitter (6).

## Description

### TECHNICAL FIELD

The present invention relates to a MALDI ion source that ionizes a sample by MALDI and a mass spectrometer including the MALDI ion source.

### BACKGROUND ART

In the related art, a MALDI ion source that ionizes a sample by MALDI has been used. For example, in a case where the MALDI ion source is used in the mass spectrometer, the sample is irradiated with laser light so that the sample is ionized. Then, the ionized sample is temporally separated by a mass separation unit according to a mass-to-charge ratio, and is sequentially detected by a detector (for example, refer to Patent Document 1).

In a mass spectrometer using a MALDI ion source, it is necessary to apply a laser to the sample with an appropriate intensity in order to create an accurate spectrum. Therefore, in the mass spectrometer using the MALDI ion source, a mechanism for adjusting the intensity of the laser is used.

### PRIOR ART DOCUMENT

### PATENT DOCUMENT

Patent Document 1: International Publication No. 2011/081180

### SUMMARY OF THE INVENTION

### PROBLEMS TO BE SOLVED BY THE INVENTION

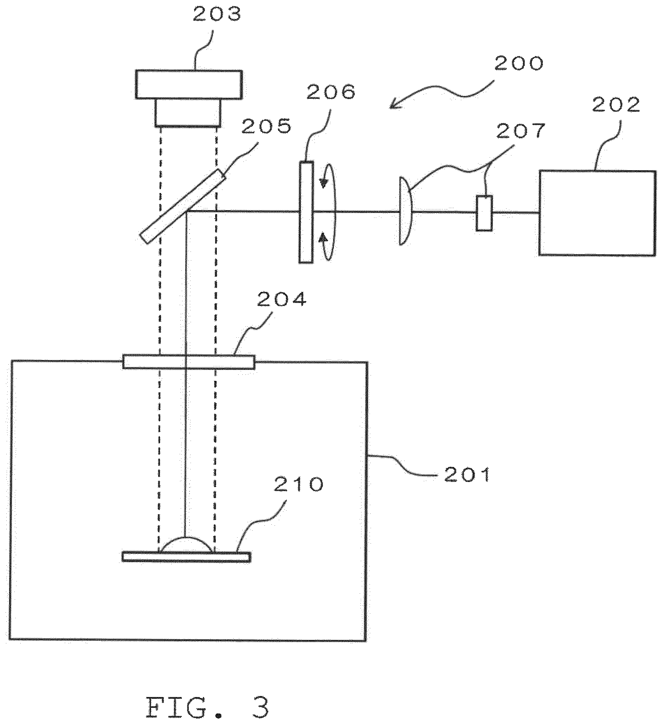

As the MALDI ion source provided with the mechanism for adjusting the intensity of the laser, for example, a MALDI ion source 200 illustrated in FIG. 3 is considered.

The MALDI ion source 200 illustrated in FIG. 3 includes a chamber 201, a laser light source 202, and a camera 203. Each of the laser light source 202 and the camera 203 is arranged apart from the chamber 201.

A window plate 204 is provided on the peripheral wall of the chamber 201. The camera 203 is arranged apart from the window plate 204. A dichroic mirror 205 is provided between the camera 203 and the window plate 204.

A rotary density filter 206 and a beam expander 207 are provided between the laser light source 202 and the dichroic mirror 205. Specifically, the rotary density filter 206 is provided on a side close to the dichroic mirror 205, and the beam expander 207 is provided on a side close to the laser light source 202. The rotary density filter 206 is rotatable about an optical axis of light directed from the laser light source 202 to the dichroic mirror 205. The rotary density filter 206 transmits light with a light amount according to the rotation position. The beam expander 207 is for expanding the diameter of the transmitted laser light.

The chamber 201 contains a sample placed on a sample plate 210.

In the MALDI ion source 200, the laser light emitted from the laser light source 202 passes through the beam expander 207, and then passes through the rotary density filter 206. The laser light is reflected by the dichroic mirror 205, passes through the window plate 204 to enter the chamber 201, and is applied to the sample on the sample plate 210. Further, the light from the sample passes through the window plate 204 and is received by the camera 203. Then, the irradiation position of the laser light is adjusted based on the imaging result of the camera 203.

At this time, in the MALDI ion source 200, the light amount (intensity) of the laser light applied to the sample is adjusted by rotating the rotary density filter 206. Therefore, the laser light is applied to the sample with an appropriate intensity.

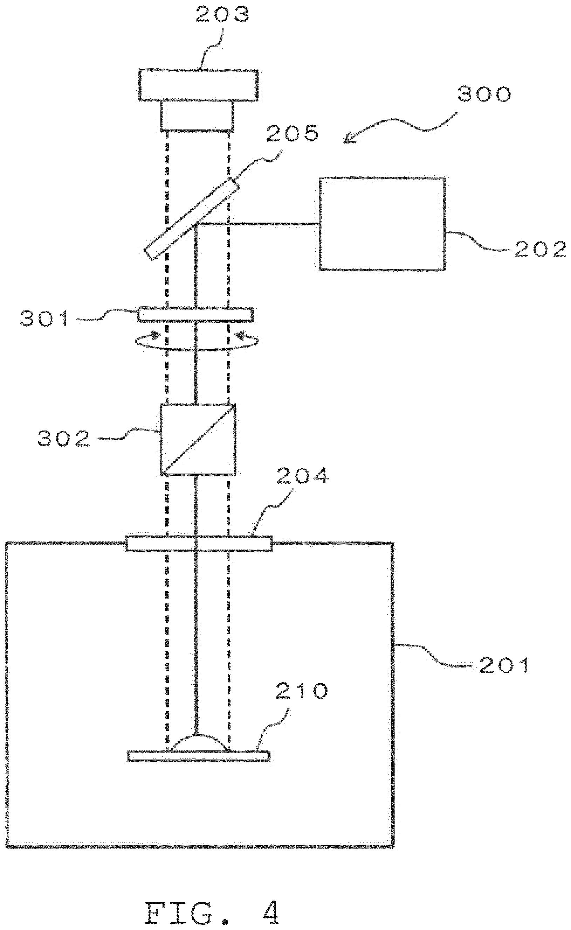

Further, as the MALDI ion source provided with the mechanism for adjusting the intensity of the laser, for example, a MALDI ion source 300 illustrated in FIG. 4 is considered. In the MALDI ion source 300 in FIG. 4, the same members as those of the MALDI ion source 200 in FIG. 3 are designated by the same reference numerals.

In the MALDI ion source 300 illustrated in FIG. 4, no optical element is provided between the laser light source 202 and the dichroic mirror 205. A waveplate 301 and a polarization beam splitter 302 are provided between the dichroic mirror 205 and the window plate 204. Specifically, the waveplate 301 is provided on a side close to the dichroic mirror 205, and the polarization beam splitter 302 is provided on a side close to the window plate 204. The waveplate 301 is rotatable about an optical axis of light directed from the dichroic mirror 205 to the window plate 204. The waveplate 301 is for changing a polarization direction of the incident light. The waveplate 301 changes the polarization direction of light according to the rotation position. The polarization beam splitter 302 transmits light in a light amount corresponding to the polarization direction of the incident light.

In the MALDI ion source 300, the laser light emitted from the laser light source 202 is reflected by the dichroic mirror 205, passes through each of the waveplate 301 and the polarization beam splitter 302, passes through the window plate 204 to enter the chamber 201, and is applied to the sample on the sample plate 210. Further, the light from the sample passes through the window plate 204 and is received by the camera 203. Then, the irradiation position of the laser light is adjusted based on the imaging result of the camera 203.

At this time, in the MALDI ion source 300, the polarization direction of the laser light incident on the polarization beam splitter 302 is changed by rotating the waveplate 301. Then, in the polarization beam splitter 302, the light amount (intensity) of the laser light is adjusted according to the polarization direction of the laser light, and the laser light is applied to the sample. Therefore, the laser light is applied to the sample with an appropriate intensity.

In the above-mentioned configuration, since the number of components is large, there are problems such as an increase in size of the device and an increase in cost. Specifically, in the MALDI ion source 200 in FIG. 3, the number of components in a region from the laser light source 202 to the dichroic mirror 205 is large, and in the MALDI ion source 300 in FIG. 4, the number of components in a region from the dichroic mirror 205 to the window plate 204 is large.

The invention has been made in view of the above circumstances, and an object of the invention is to provide a MALDI ion source and a mass spectrometer which can suppress an increase in the number of components and realize miniaturization and cost reduction.

### MEANS FOR SOLVING THE PROBLEMS

(1) A MALDI ion source according to the invention is a MALDI ion source that ionizes a sample by MALDI. The MALDI ion source includes a laser light source, a camera, an optical element, and an energy adjustment member. The laser light source emits laser light. The camera receives light from the sample which is irradiated with the laser light. In the optical element, an optical axis of the laser light applied to the sample and an optical axis of the light directed to the camera from the sample irradiated with the laser light are coaxially arranged. The energy adjustment member adjusts energy of the laser light of which the optical axis has been coaxially arranged with the optical axis of the light directed to the camera by the optical element. The energy adjustment member adjusts energy of the laser light by being rotated around the optical axis of the laser light.

With such a configuration, in the MALDI ion source, the energy of the laser light from the laser light source is adjusted in the energy adjustment member after the laser light passes through the optical element. Then, the laser light of which the energy has been adjusted is applied toward the sample. Further, the energy adjustment member is rotated to adjust the energy of the laser light.

Therefore, in the MALDI ion source, it is possible to adjust the energy of the laser light and apply the laser light to the sample only by providing the rotatable energy adjustment member.

As a result, it is possible to suppress an increase in the number of components, and it is possible to realize miniaturization and cost reduction.

(2) The energy adjustment member may be a member of which transmittance differs depending on a polarization direction of transmitted light.

With such a configuration, the energy adjustment member can be simply configured.

(3) The MALDI ion source may further include a chamber. In the chamber, the sample is installed. The laser light source, the camera, the optical element, and the energy adjustment member may be provided outside the chamber.

With such a configuration, the reflected light and scattered light generated by the MALDI ion source are shielded by the chamber.

Therefore, it is possible to suppress the application of the reflected light and scattered light generated by the MALDI ion source to the sample.

(4) The MALDI ion source may further include a damper member. The damper member is provided around the energy adjustment member to be centered on the optical axis of the laser light, and attenuates light reflected by the energy adjustment member. The damper member has an annular shape.

With such a configuration, the reflected light and scattered light generated by the laser light being incident on the energy adjustment member can be shielded by the damper member.

Therefore, it is possible to suppress the application of the reflected light and scattered light generated by the energy adjustment member to the sample.

(5) A mass spectrometer according to the invention includes the above-described MALDI ion source, a mass separation unit, and a detection unit. The mass separation unit separates ions generated in the MALDI ion source by mass. The detection unit detects ions separated by mass in the mass separation unit.

### EFFECTS OF THE INVENTION

According to the invention, in the MALDI ion source, the energy of the laser light from the laser light source is adjusted in the energy adjustment member after the laser light passes through the optical element. Then, the laser light of which the energy has been adjusted is applied toward the sample. Further, the energy adjustment member is rotated to adjust the energy of the laser light. Therefore, in the MALDI ion source, it is possible to adjust the energy of the laser light and apply the laser light to the sample only by providing the rotatable energy adjustment member. As a result, it is possible to suppress an increase in the number of components, and it is possible to realize miniaturization and cost reduction.

### BRIEF DESCRIPTION OF THE DRAWINGS

FIG. 1 is a schematic diagram illustrating a configuration example of a mass spectrometer according to an embodiment of the invention.
FIG. 2 is a schematic diagram illustrating a configuration example of a MALDI ion source according to an embodiment of the invention.
FIG. 3 is a schematic diagram illustrating a configuration example of a first MALDI ion source that can be considered from a configuration in the related art.
FIG. 4 is a schematic diagram illustrating a configuration example of a second MALDI ion source that can be considered from a configuration in the related art.

### MODE FOR CARRYING OUT THE INVENTION

### 1. Configuration of Mass Spectrometer

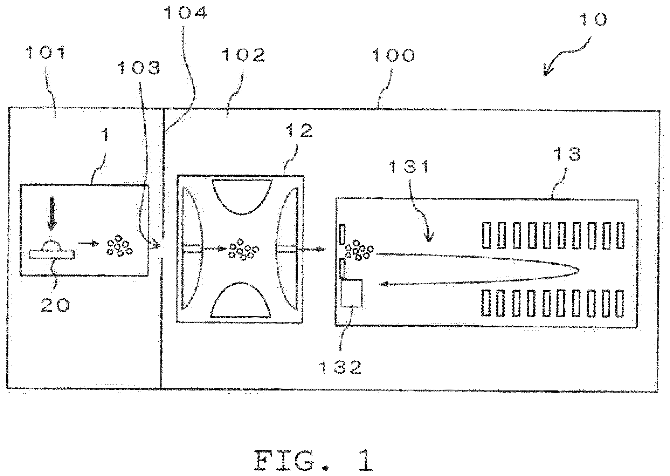

FIG. 1 is a schematic diagram illustrating a configuration example of a mass spectrometer 10 according to an embodiment of the invention. The mass spectrometer 10 is, for example, a matrix-assisted laser desorption/ionization ion trap time-of-flight mass spectrometer (MALDI-IT-TOFMS).

The mass spectrometer 10 includes, for example, a MALDI ion source 1, an ion trap 12, a TOFMS (time-of-flight mass spectrometer) 13, and a main body 100.

The main body 100 is formed in a hollow shape. The MALDI ion source 1, the ion trap 12, the TOFMS 13, and the like are provided in the main body 100. For example, a first chamber 101 and a second chamber 102 are formed in the main body 100. In this example, the first chamber 101 forms a space for accommodating the MALDI ion source 1. On the other hand, the second chamber 102 forms a space for accommodating the ion trap 12 and the TOFMS 13.

The first chamber 101 and the second chamber 102 communicate with each other through an opening 103. That is, the first chamber 101 and the second chamber 102 are partitioned via a partition wall 104, and communicate with each other through the opening 103 formed in the partition wall 104. The inside of the first chamber 101 and the inside of the second chamber 102 are in a vacuum state by a vacuum pump or the like (not illustrated).

The MALDI ion source 1 ionizes the sample by MALDI, and supplies the obtained ions to the ion trap 12. The sample is prepared, for example, in a concentrated state on a sample plate 20, and is set in the MALDI ion source 1 together with the sample plate 20 at the time of analysis.

The ion trap 12 is, for example, a three-dimensional quadrupole type.

A flight space 131 is formed in the TOFMS 13. Further, the TOFMS 13 is provided with an ion detector 132. The TOFMS 13 constitutes an example of the mass separation unit. The ion detector 132 constitutes an example of a detection unit.

When the mass spectrometer 10 is used, first, in the MALDI ion source 1, the sample is irradiated with a laser by using a matrix-assisted laser desorption/ionization method (MALDI). As a result, the sample is vaporized in vacuum together with a matrix, and the sample is ionized by exchanging protons between the sample and the matrix.

Then, the ions obtained from the MALDI ion source 1 are captured by the ion trap 12. In the ion trap 12, a part of the captured ions is selectively left in the ion trap 12, and is cleaved by collision-induced dissociation (CID). The ions cleaved in this way are supplied from the ion trap 12 to the TOFMS 13.

In the TOFMS 13, the ions flying in the flight space 131 are detected by the ion detector 132. Specifically, the ions accelerated by an electric field formed in the flight space 131 are temporally separated (mass separated) according to the mass-to-charge ratios while flying in the flight space 131, and are sequentially detected by the ion detector 132. As a result, a relationship between the mass-to-charge ratio and a detection intensity in the ion detector 132 is measured as a spectrum, and mass spectrometry is realized.

### 2. Configuration of MALDI Ion Source

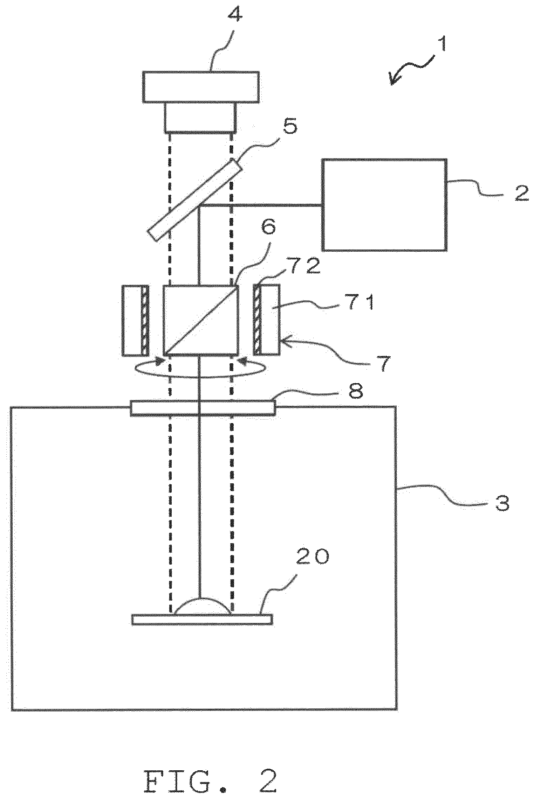

FIG. 2 is a schematic diagram illustrating a configuration example of the MALDI ion source 1 according to an embodiment of the invention.

The MALDI ion source 1 includes a laser light source 2, a chamber 3, a camera 4, a mirror 5, a polarization beam splitter 6, and a damper member 7. Each of the laser light source 2 and the camera 4 is arranged apart from the chamber 3. The mirror 5, the polarization beam splitter 6, and the damper member 7 are arranged between the chamber 3 and the camera 4.

The chamber 3 is formed in a box shape. A window plate 8 is provided on the peripheral wall of the chamber 3. The window plate 8 is arranged apart from the camera 4. The chamber 3 contains the sample placed on the sample plate 20. The sample plate 20 (the sample placed on the sample plate 20) faces the window plate 8.

The camera 4 includes a lens, a CCD, and the like (not illustrated).

The mirror 5 is arranged between the chamber 3 and the camera 4, and faces the laser light source 2. The mirror 5 is, for example, a dichroic mirror. In a case where the mirror 5 is a dichroic mirror, the mirror 5 reflects only light of a specific wavelength, and transmits light of the other wavelengths. The mirror 5 may be a half mirror. The mirror 5 constitutes an example of an optical element.

The polarization beam splitter 6 is arranged between the mirror 5 and the window plate 8. The polarization beam splitter 6 is a member of which the transmittance differs depending on the polarization direction of the transmitted light. The polarization beam splitter 6 may have a cube shape or a plate shape (mirror shape). The polarization beam splitter 6 is configured to be rotatable. The polarization beam splitter 6 constitutes an example of an energy adjustment member.

Specifically, the polarization beam splitter 6 is provided on a rotating portion (not illustrated) that is configured to be rotatable. This rotating portion can be rotated around the optical axis of the laser light, which is reflected by the mirror 5 and directed toward the sample, (the optical axis of the laser light applied to the sample), and is rotated by the drive force being applied from a driving source such as a motor (not illustrated). Then, when this rotating portion is rotated, the polarization beam splitter 6 is rotated around the optical axis of the laser light (the optical axis of the laser light applied to the sample).

The damper member 7 is formed in an annular shape, and surrounds the polarization beam splitter 6 (provided around the polarization beam splitter 6). Specifically, the damper member 7 is arranged so as to be centered on the optical axis of the laser light applied to the sample. The damper member 7 includes a base portion 71 and a shielding portion 72. The base portion 71 is formed in an annular shape. Specifically, the base portion 71 is, for example, a ring shape. The shielding portion 72 is formed on the inner peripheral surface of the base portion 71. The shielding portion 72 is configured to attenuate light. Specifically, the shielding portion 72 is, for example, an attenuation layer formed by applying black paint to the inner peripheral surface of the base portion 71.

### 3. Operation of MALDI Ion Source

In a case where the MALDI ion source 1 is used, the light of a specific wavelength among laser light emitted from the laser light source 2 is reflected by the mirror 5, then passes through the polarization beam splitter 6 to enter the chamber 3. The laser light transmitted through the polarization beam splitter 6 is applied to the sample on the sample plate 20. Further, the light from the sample passes through the window plate 8, the polarization beam splitter 6, and the mirror 5, and is received by the camera 4. In this way, in the MALDI ion source 1, the optical axis of the laser light emitted from the sample and the optical axis of the light directed toward the camera 4 from the sample irradiated with the laser light are coaxially arranged by the mirror 5.

At this time, the polarization beam splitter 6 is rotated appropriately, so that the laser light passes through the polarization beam splitter 6 with the transmittance corresponding to the polarization direction. Specifically, the polarization beam splitter 6 is rotated by a predetermined angle by the drive force being applied from a driving source (not illustrated) to the rotating portion (not illustrated). As a result, the polarization direction of the laser light with respect to the polarization beam splitter 6 is changed, and the amount of laser light transmitted through the polarization beam splitter 6 is changed. That is, the energy of the laser light reflected by the mirror 5 is adjusted by the polarization beam splitter 6. Then, the laser light after the energy is adjusted is applied to the sample.

Further, the angle at which the polarization beam splitter 6 is rotated is determined such that, for example, a laser light with a light amount (intensity) desired by the user passes through the polarization beam splitter 6. This determination is performed, for example, when the user operates an operation unit (not illustrated) provided in the mass spectrometer 10.

In this case, the user can adjust the amount of laser light transmitted through the polarization beam splitter 6 by operating the operation unit so that the intensity value indicated by the spectrum becomes a predetermined value while checking the spectrum. In the mass spectrometer 10, the light amount (intensity) of the laser light passing through the polarization beam splitter 6 is set in advance, and the polarization beam splitter 6 may be automatically rotated such that the laser light passes through the polarization beam splitter 6 by the set light amount.

Further, the reflected light and scattered light generated by the laser light being incident on the polarization beam splitter 6 are attenuated by the damper member 7. Specifically, in a case where the shielding portion 72 is an attenuation layer formed of black paint, the reflected light and scattered light generated by the polarization beam splitter 6 are attenuated by being absorbed by the shielding portion 72. Therefore, the application of the reflected light and scattered light generated by the polarization beam splitter 6 to the sample in the chamber 3 is suppressed. Further, the light which has not been absorbed by the damper member 7 and other reflected light and scattered light generated by the MALDI ion source 1 are shielded by the peripheral wall of the chamber 3.

As described above, in the MALDI ion source 1, the light amount of laser light can be adjusted only by providing the rotatable polarization beam splitter 6. The laser can be applied to the sample with an appropriate intensity.

### 4. Effects

(1) According to the embodiment, as illustrated in FIG. 1, the mass spectrometer 10 includes the MALDI ion source 1. As illustrated in FIG. 2, in the MALDI ion source 1, the laser light from the laser light source 2 is reflected by the mirror 5, and then the energy of the laser light is adjusted by the polarization beam splitter 6. Then, the laser light of which the energy has been adjusted is applied toward the sample. Further, the polarization beam splitter 6 is rotated to adjust the energy of the laser light.

Therefore, in the MALDI ion source 1, it is possible to adjust the energy of the laser light and apply the laser light to the sample only by providing the rotatable polarization beam splitter 6.

As a result, in the MALDI ion source 1 (mass spectrometer 10), it is possible to suppress an increase in the number of components, and it is possible to realize miniaturization and cost reduction.

(2) Further, according to the embodiment, the polarization beam splitter 6 which is an example of the energy adjustment member is a member of which the transmittance differs depending on the polarization direction of the transmitted light.

Therefore, the energy adjustment member can be simply configured.

(3) Further, according to the embodiment, the MALDI ion source 1 includes the chamber 3. The sample plate 20 (the sample plate 20 and the sample) is installed in the chamber 3. The laser light source 2, the camera 4, the mirror 5, and the polarization beam splitter 6 are provided outside the chamber 3.

Therefore, the reflected light and scattered light generated by the MALDI ion source 1 are shielded by the peripheral wall of the chamber 3.

As a result, it is possible to suppress the application of the reflected light and scattered light generated by the MALDI ion source 1 to the sample.

(4) Further, according to the embodiment, as illustrated in FIG. 2, the MALDI ion source 1 includes the damper member 7. The damper member 7 is provided around the polarization beam splitter 6.

Therefore, in the MALDI ion source 1, the reflected light and scattered light generated by the laser light being incident on the polarization beam splitter 6 can be shielded by the damper member 7.

As a result, it is possible to suppress the application of the reflected light and scattered light generated by the polarization beam splitter 6 to the sample.

### 5. Modification Example

In the above embodiment, the damper member 7 has been described as being a member including the shielding portion 72 that absorbs light. However, the damper member 7 may be a member that attenuates light by reflecting light multiple times. For example, the damper member 7 may be an annular member, and its peripheral surface may be tapered toward the outside of the polarization beam splitter 6. With such a configuration, when the light hitting the inner peripheral surface of the polarization beam splitter 6 hits the damper member, the light is attenuated by being repeatedly reflected multiple times.

### DESCRIPTION OF REFERENCE SIGNS

- 1: MALDI ion source

- 2: laser light source
- 3: chamber
- 4: camera
- 5: mirror
- 6: polarization beam splitter
- 7: damper member
- 10: mass spectrometer
- 13: TOFMS
- 71: base portion
- 72: shielding portion
- 132: ion detector

## Claims

1. A MALDI ion source that ionizes a sample by MALDI, the MALDI ion source comprising:
a laser light source that emits laser light;
a camera that receives light from the sample which is irradiated with the laser light;
an optical element in which an optical axis of the laser light applied to the sample and an optical axis of the light directed to the camera from the sample irradiated with the laser light are coaxially arranged; and
an energy adjustment member that adjusts energy of the laser light of which the optical axis has been coaxially arranged with the optical axis of the light directed to the camera by the optical element,
wherein the energy adjustment member adjusts energy of the laser light by being rotated around the optical axis of the laser light.

2. The MALDI ion source according to claim 1, wherein the energy adjustment member is a member of which transmittance differs depending on a polarization direction of transmitted light.

3. The MALDI ion source according to claim 1, further comprising:
a chamber in which the sample is installed,
wherein the laser light source, the camera, the optical element, and the energy adjustment member are provided outside the chamber.

4. The MALDI ion source according to claim 1, further comprising:
an annular damper member which is provided around the energy adjustment member to be centered on the optical axis of the laser light, and attenuates light reflected by the energy adjustment member.

5. A mass spectrometer comprising:
the MALDI ion source according to claim 1;
a mass separation unit that separates ions generated in the MALDI ion source by mass; and
a detection unit that detects ions separated by mass in the mass separation unit.
